(19) Europäisches Patentamt
European Patent Office
Office européen des brevets

(11) **EP 4 071 927 B1**

(12) **EUROPEAN PATENT SPECIFICATION**

(45) Date of publication and mention
of the grant of the patent:
**26.03.2025 Bulletin 2025/13**

(21) Application number: **22167062.3**

(22) Date of filing: **07.04.2022**

(51) International Patent Classification (IPC):
*H01Q 1/22* (2006.01)   *H01Q 3/44* (2006.01)
*H01Q 9/28* (2006.01)   *H01Q 21/20* (2006.01)
*H01Q 25/00* (2006.01)  *H01Q 19/10* (2006.01)

(52) Cooperative Patent Classification (CPC):
**H01Q 1/2291; H01Q 3/44; H01Q 9/285;
H01Q 19/108; H01Q 21/205; H01Q 25/002**

(54) **RECONFIGURABLE ANTENNA AND NETWORK DEVICE**

REKONFIGURIERBARE ANTENNE UND NETZWERKVORRICHTUNG

ANTENNE RECONFIGURABLE ET DISPOSITIF DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2021 CN 202110372086**

(43) Date of publication of application:
**12.10.2022 Bulletin 2022/41**

(73) Proprietor: **Huawei Technologies Co., Ltd.
Longgang District
Shenzhen,
Guangdong 518129 (CN)**

(72) Inventors:
• **TAO, Zui**
  **Shenzhen, 518129 (CN)**
• **ZHOU, Xiao**
  **Shenzhen, 518129 (CN)**
• **ZHAO, Jie**
  **Shenzhen, 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**CN-A- 104 538 738    US-A1- 2017 033 471**

## Description

### TECHNICAL FIELD

This application relates to the field of communications technologies, and in particular, to a reconfigurable antenna, and a network device including the reconfigurable antenna.

### BACKGROUND

A wireless local area network usually includes a plurality of wireless access points (APs) that operate at a same frequency. A signal coverage area of a single wireless access point needs to be adjusted correspondingly based on a different use scenario requirement. When adjacent wireless access points are close to each other, the signal coverage area of the single wireless access point needs to be small, to avoid co-channel interference. When adjacent wireless access points are far away from each other, the signal coverage area of the single wireless access point needs to be large, to avoid a signal coverage hole.

The wireless access point may implement switching between beams at different azimuths by using a reconfigurable antenna. However, a beam at a pitch angle may be usually implemented by perform switching between two or more antennas by using a radio frequency switch. The antennas have different maximum gain directions. In such an adjustment manner, there is a high insertion loss, overall antenna performance decreases, and an antenna size is increased.

US 2017/033471 A1 discloses an antenna system including a system ground plane, a first antenna array, and a second antenna array. The first antenna array includes a first antenna element, a second antenna element, a third antenna element, and a fourth antenna element. The second antenna array includes a fifth antenna element, a sixth antenna element, a seventh antenna element, and an eighth antenna element. The second antenna array is disposed between the first antenna array and the system ground plane. The first antenna array has a first polarization direction. The second antenna array has a second polarization direction. The first polarization direction and the second polarization direction are orthogonal to each other.

CN 104 538 738 A discloses a switchable antenna applied to wireless communication. The switchable antenna controls the state of a reflector corresponding to each antenna unit to obtain an expected radiation direction diagram, thereby realizing self adaption to the wireless environment and providing efficient and reliable communication link connection to two transmitting and receiving devices. Another aspect of the invention describes a switch (for example, a diode) used for connecting the two reflectors. Electronic control of the on-off states of the diode is carried out so that the corresponding two reflectors are electrically connected or disconnected.

## SUMMARY

This application provides a reconfigurable antenna, to implement a function of switching beams at a pitch angle when there is a small insertion loss. This application further relates to a network device including the reconfigurable antenna. Specific technical solutions are as follows:

According to a first aspect, this application provides a reconfigurable antenna, including a bottom plate, a vertically polarized high-density antenna, wherein the bottom plate is disposed in the polarization direction of the vertically polarized high-density antenna, and a controllable reflector. The controllable reflector is located between the bottom plate and the vertically polarized high-density antenna, and a projection of the controllable reflector on the bottom plate is at a center of a projection of the vertically polarized high-density antenna on the bottom plate; and the controllable reflector includes a switch, and the switch is configured to enable the controllable reflector to be in an operating state or an off state wherein the controllable reflector is further provided with an inductor structure, the inductor structure and the switch are connected in parallel, the inductor structure and the switch form a resonator, and a resonance frequency of the resonator falls within the operating frequency band of the vertically polarized high-density antenna.

In this application, the reconfigurable antenna reflects a signal of the vertically polarized high-density antenna by using the bottom plate, to improve overall performance of the antenna. The controllable reflector disposed between the bottom plate and the vertically polarized high-density antenna and located at a central location of the vertically polarized high-density antenna can reflect a beam of the vertically polarized high-density antenna outwards. When the switch of the controllable reflector is opened, the controllable reflector is in the off state. In this case, a pitch angle of the vertically polarized high-density antenna is narrow, and a signal coverage area is small, so that a high-density characteristic can be implemented. However, when the switch of the controllable reflector is closed, the controllable reflector is in the operating state. In this case, because the controllable reflector reflects a beam outwards, the pitch angle of the vertically polarized high-density antenna is widened, and the signal coverage area is correspondingly extended. Compared with a form of switching an antenna by using a radio frequency switch, in a process of adjusting a pitch angle of the reconfigurable antenna in this application, there is a smaller insertion loss, and a size of the reconfigurable antenna is also controlled.

In a possible implementation, the controllable reflector includes a part parallel to a polarization direction of the vertically polarized high-density antenna, a distance D1 between the controllable reflector and the vertically polarized high-density antenna meets a condition: $D1 \leq 1/4\lambda$, and $\lambda$ is a wavelength corresponding to an operating frequency band of the vertically polarized high-density antenna.

In this implementation, the part that is of the controllable reflector and that is parallel to the polarization direction of the vertically polarized high-density antenna may reflect more beams in the polarization direction. However, the distance between the controllable reflector and the vertically polarized high-density antenna is set, to control a phase difference between the controllable reflector and the vertically polarized high-density antenna, and improve reflection efficiency of the controllable reflector.

In a possible implementation, in the polarization direction of the vertically polarized high-density antenna, the controllable reflector includes a first end close to the bottom plate, and the first end is electrically connected to the bottom plate.

In this implementation, the controllable reflector and the bottom plate are electrically connected, to extend a distance in which the controllable reflector performs an action on a beam, and further improve reflection efficiency of the controllable reflector.

In a possible implementation, the controllable reflector further includes a second end opposite the first end, and the switch is located closer to the first end than the second end.

In this implementation, the switch is disposed on a side close to the bottom plate, to reduce impact that is on a beam and that exists when the controllable reflector is in the off state, and improve a difference in reflection efficiency of the controllable reflector between the off state and the operating state.

In a possible implementation, a length of the controllable reflector in the polarization direction of the vertically polarized high-density antenna is a first length L1, and the first length L1 meets a condition: $1/4\lambda \le L1 \le \lambda$.

In this implementation, the length of the controllable reflector is controlled, to ensure a distance in which the controllable reflector performs an action on a beam, and improve reflection efficiency of the controllable reflector.

According to the invention, the controllable reflector is further provided with an inductor structure, the inductor structure and the switch are connected in parallel, the inductor structure and the switch form a resonator, and a resonance frequency of the resonator falls within the operating frequency band of the vertically polarized high-density antenna.

Thus, the inductor structure is disposed, to form the resonator in an operating frequency band of the switch, form large impedance when the switch is opened, and improve an isolation degree existing when the switch in an opened state.

In a possible implementation, there is one controllable reflector; or there are a plurality of controllable reflectors, and the plurality of controllable reflectors are evenly distributed in a circle.

In this implementation, when there is one controllable reflector, the controllable reflector may be located at a central location of the vertically polarized high-density antenna, so that a radiation pattern of the reconfigurable antenna in this application is more evenly distributed; or when there are a plurality of controllable reflectors, the plurality of controllable reflectors are evenly distributed, to increase a range in which the controllable reflector performs an action on a beam, and further increase the pitch angle of the reconfigurable antenna.

In a possible implementation, when the controllable reflector is in the off state, an angle corresponding to a maximum gain of a pitch angle of the reconfigurable antenna is 37.5 degrees; or when the controllable reflector is in the operating state, an angle corresponding to a maximum gain of a pitch angle of the reconfigurable antenna is 70 degrees.

In this implementation, when the angle corresponding to the maximum gain of the pitch angle of the reconfigurable antenna is controlled to be 37.5 degrees, the reconfigurable antenna in this application may operate in a high density mode. When the angle corresponding to the maximum gain of the pitch angle of the reconfigurable antenna is controlled to be 70 degrees, the reconfigurable antenna in this application may operate in an omnidirectional mode or a directional mode.

In a possible implementation, when the vertically polarized high-density antenna is in a directional mode, a maximum gain that is of the reconfigurable antenna and that exists when the controllable reflector is in the operating state is 1 decibel to 2.5 decibels greater than a maximum gain that is of the reconfigurable antenna and that exists when the controllable reflector is in the off state.

In this implementation, the vertically polarized high-density antenna may be set to be in the directional mode, to implement a larger signal coverage area in a preset direction. In addition, under the action of the controllable reflector, the maximum gain of the reconfigurable antenna in this application can be further improved in the directional mode, to improve antenna performance of the reconfigurable antenna.

In a possible implementation, the vertically polarized high-density antenna includes N dipoles and a feeding part, N is an integer greater than or equal to 3, each dipole is connected to the feeding part, and the dipoles are distributed in a circle.

In this implementation, the N dipoles distributed in the circle form a radiation element of the vertically polarized high-density antenna, and signals are fed into the dipoles respectively through the feeding part, to form a low side lobe characteristic in the polarization direction of the vertically polarized high-density antenna, and suppress co-channel interference.

In a possible implementation, the vertically polarized high-density antenna is a dipole antenna, each dipole includes a pair of an upper dipole and a lower dipole, and the feeding part separately feeds each upper dipole and feeds each lower dipole.

In a possible implementation, the vertically polarized high-density antenna is a monopole antenna, the vertically polarized high-density antenna is further provided with a grounding part, and the grounding part is located between each dipole and the bottom plate.

In the foregoing two implementations, the vertically polarized high-density antenna has different constitution forms, and the low side lobe characteristic in the polarization direction can be implemented.

In a possible implementation, a length direction of each dipole points to a center of the vertically polarized high-density antenna, and a length of each dipole in the direction meets a condition: $1/4\lambda \leq L2 \leq 3/4\lambda$.

In this implementation, the length direction of each dipole points to the center of the vertically polarized high-density antenna, so that a radiation pattern of the vertically polarized high-density antenna can be more even. However, the length of each dipole is limited, to improve radiation efficiency of each dipole.

In a possible implementation, the feeding part is located at a center of each dipole.

In this implementation, a location of the feeding part is set, to reduce an insertion loss of the vertically polarized high-density antenna.

In a possible implementation, the feeding part includes a power splitter, an impedance conversion line, and an ohm transmission line.

In this implementation, the feeding part feeds a signal through the power splitter, and feeds the signal into each dipole through the impedance conversion line and the ohm transmission line, to implement a feeding function.

In a possible implementation, the vertically polarized high-density antenna further includes a circuit board, and each dipole and the feeding part are disposed on an outer surface of the circuit board.

In a possible implementation, the vertically polarized high-density antenna is further provided with a plurality of azimuth reflectors, each azimuth reflector is also distributed in a circle, a length direction of each azimuth reflector is parallel to the polarization direction, and there is a maximum of one azimuth reflector between two adjacent dipoles.

The azimuth reflector is disposed, so that the radiation pattern of the vertically polarized high-density antenna is even, to improve a radiation capability of the vertically polarized high-density antenna in a horizontal direction.

In a possible implementation, each azimuth reflector is also provided with a switch.

In this implementation, the switch of the azimuth reflector is controlled, to adjust a horizontal radiation angle of the vertically polarized high-density antenna, so that the vertically polarized high-density antenna is switched between the directional mode and the omnidirectional mode.

In a possible implementation, each switch of each azimuth reflector is located at a central location of the azimuth reflector.

In this implementation, a location of the switch on the azimuth reflector is set, to reduce impact that is on a beam and that exists when the azimuth reflector is in an off state, and improve a reflection efficiency difference of the azimuth reflector between the off state and an operating state.

According to a second aspect, this application provides a network device, including a radio frequency circuit, a control circuit, and the reconfigurable antenna according to the first aspect of this application. The radio frequency circuit is electrically connected to the reconfigurable antenna, and a switch is controlled by the control circuit.

Technical effects achieved in the second aspect are similar to technical effects achieved by the corresponding technical means in the first aspect, and details are not described herein again.

**BRIEF DESCRIPTION OF DRAWINGS**

FIG. 1 is a diagram of an application scenario of a network device according to an embodiment of this application;
FIG. 2 is a schematic diagram of an application scenario in which a plurality of network devices form an array according to an embodiment of this application;
FIG. 3 is a schematic diagram of a structure of a network device according to an embodiment of this application;
FIG. 4 is a schematic diagram of a structure of a reconfigurable antenna according to an embodiment of this application;
FIG. 5 is a schematic diagram of a layout of a plane of a reconfigurable antenna according to an embodiment of this application;
FIG. 6a and FIG. 6b are schematic diagrams of pitch angle simulation results of a reconfigurable antenna in different operating modes according to an embodiment of this application;
FIG. 6c is a schematic diagram of signal coverage areas of a reconfigurable antenna in different operating modes according to an embodiment of this application;
FIG. 7 is a schematic diagram of a structure of a side surface of a reconfigurable antenna according to the embodiments of this application;
FIG. 8 is a schematic diagram of a structure of another reconfigurable antenna according to an embodiment of this application;
FIG. 9 is a schematic diagram of a structure of a side surface of a single controllable reflector of another reconfigurable antenna according to an embodiment of this application;

FIG. 10 is a schematic diagram of a structure of a vertically polarized high-density antenna of a reconfigurable antenna according to an embodiment of this application;

FIG. 11 is a schematic diagram of a structure in which a vertically polarized high-density antenna is a dipole antenna according to an embodiment of this application;

FIG. 12 is a schematic diagram of a plane that is of an upper part and that exists when a vertically polarized high-density antenna is a dipole antenna according to an embodiment of this application;

FIG. 13 is a schematic diagram of a plane that is of a lower part and that exists when a vertically polarized high-density antenna is a dipole antenna according to an embodiment of this application;

FIG. 14 is a schematic diagram of a plane that is of an upper part and that exists when another vertically polarized high-density antenna is a dipole antenna according to an embodiment of this application;

FIG. 15 is a schematic diagram of a structure in which a vertically polarized high-density antenna is a monopole antenna according to an embodiment of this application;

FIG. 16 is a schematic diagram of a plane that is of an upper part and that exists when a vertically polarized high-density antenna is a monopole antenna according to an embodiment of this application;

FIG. 17 is a schematic diagram of a structure of another reconfigurable antenna according to an embodiment of this application;

FIG. 18 is a schematic diagram of a structure of a side surface of a reconfigurable antenna according to an embodiment of this application;

FIG. 19 is a schematic diagram of a structure of a plane of a reconfigurable antenna according to an embodiment of this application; and

FIG. 20 is a schematic diagram of simulation results in a horizontal direction that exist when a vertically polarized high-density antenna of a reconfigurable antenna is in different operating modes according to an embodiment of this application.

## DESCRIPTION OF EMBODIMENTS

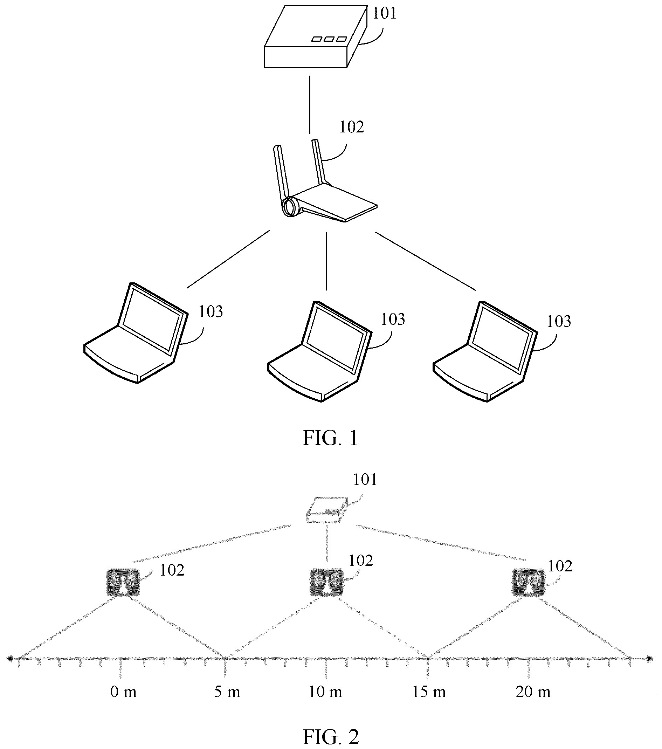

FIG. 1 is a diagram of an application scenario of a network device according to an embodiment of this application. As shown in FIG. 1, the scenario includes a controller 101, an access point (access point, AP) 102, and a plurality of terminals 103. The controller 101 may manage and configure the access point 102, and forward user data. The access point 102 is configured to provide a wireless access service for a plurality of connected terminals 103. The network device provided in this application may be a base station, a router, a switch, or the like, and works as the access point 102. The plurality of terminals 103 may be products such as a mobile phone, a computer, and a smart home appliance. In addition, only three terminals are used as an example for description in FIG. 1, and do not constitute a limitation on a quantity of terminals in the application scenario provided in this embodiment of this application.

FIG. 2 is a diagram of an application scenario in which a plurality of network devices are deployed according to this application. A controller 101 may be configured to: centrally manage and configure a plurality of access points 102, and forward user data. The plurality of access points 102 are usually disposed at a height of 3 meters to 5 meters (m). A radius of a coverage cell may be different based on a use requirement, and may be set to be less than 10 m or fall within a range from 10 m to 20 m, or may even be greater than 20 m.

For a use scenario requirement, a communication capacity and a quantity of channels are usually considered. When there is a large quantity of users per unit area, to ensure the communication capacity, it may be set that the access point 102 performs signal coverage in a large-angle omnidirectional mode (for example, a coverage radius of the access point 102 falls within the range from 10 m and 20 m). However, there is a limited quantity of channels of the single access point 102. In this case, a distance between access points 102 may be set to be reduced, and signal coverage is performed in a small-angle high density mode (for example, a coverage radius of the access point 102 is less than 10 m). However, in a scenario in which there is a small quantity of users per unit area and there is a large cell area, a distance between access points 102 may alternatively be set to be large, and signal coverage is performed in a super-large-angle directional mode (for example, a coverage radius of the access point 102 is greater than 20 m).

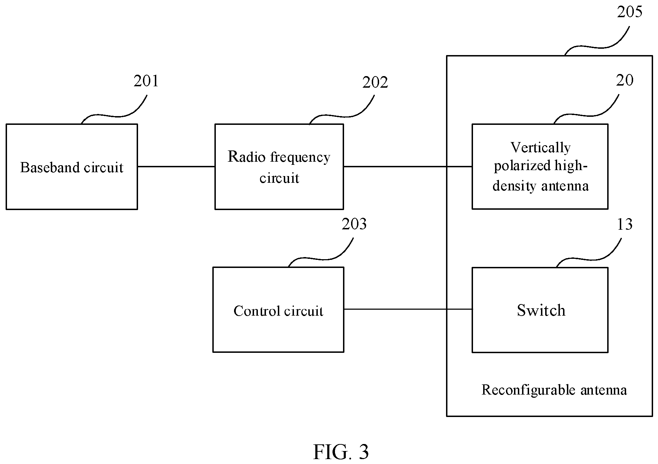

FIG. 3 is a schematic diagram of a structure of a network device according to an embodiment of this application. For example, the access point 102 in FIG. 1 and FIG. 2 may be implemented by using the network device shown in FIG. 3. Refer to FIG. 3. The network device includes a baseband circuit 201, a radio frequency circuit 202, a control circuit 203, and a reconfigurable antenna 205.

The baseband circuit 201 is configured to process a received radio signal or a to-be-sent radio signal.

The reconfigurable antenna 205 is a reconfigurable antenna provided in this application. The reconfigurable antenna 205 includes a vertically polarized high-density antenna 20 and a switch 13. For descriptions of the vertically polarized high-density antenna 20 and the switch 13, refer to related descriptions in subsequent embodiments.

The radio frequency circuit 202 is connected between the vertically polarized high-density antenna 20 of the reconfigurable antenna 205 and the baseband circuit 201, and is configured to cooperate with the reconfigurable antenna 205 to receive and send a radio signal.

The control circuit 203 is electrically connected to the switch 13 of the reconfigurable antenna 205, and is configured to control an operating mode of the reconfigurable antenna 205, so that a radiation angle of the reconfigurable antenna 205 can be switched, to change a signal coverage area, and adapt to different use scenario requirements. The control circuit 203 may be implemented by using a complex programmable logical device (CPLD), or in a general purpose input/output (GPIO) manner.

The following describes the reconfigurable antenna 205 provided in this embodiment of this application.

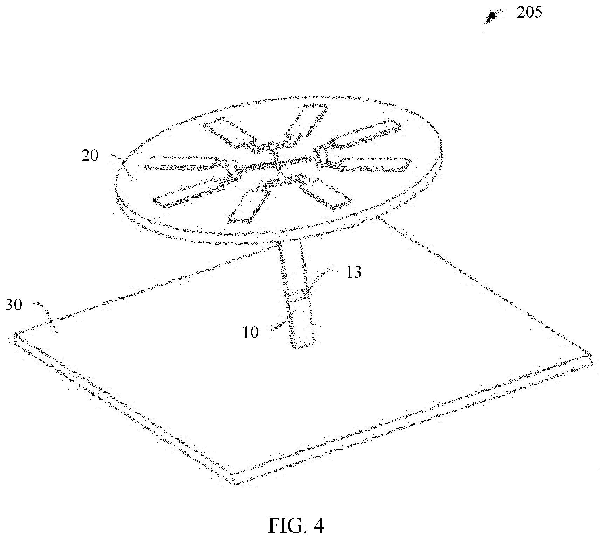

FIG. 4 is a schematic diagram of a structure of a reconfigurable antenna 205 according to an embodiment of this application. As shown in FIG. 4, the reconfigurable antenna 205 may include a bottom plate 30, a vertically polarized high-density antenna 20, and a controllable reflector 10. The vertically polarized high-density antenna 20 serves as a radiation body of the reconfigurable antenna 205, and is configured to separately radiate to two opposite sides in a polarization direction of the vertically polarized high-density antenna 20. The bottom plate 30 is conductive, and is disposed in the polarization direction of the vertically polarized high-density antenna 20. The bottom plate 30 and the vertically polarized high-density antenna 20 are spaced from each other. The bottom plate 30 may reflect a signal beam emitted by the vertically polarized high-density antenna 20, so that after a signal beam emitted by the vertically polarized high-density antenna 20 toward one side is reflected, the signal beam converges with a signal beam on the other side, and propagates toward a same side of the vertically polarized high-density antenna 20. Usually, a direction of the same side is a downward propagation direction of a network device. In other words, the signal beam emitted by the vertically polarized high-density antenna 20 propagates toward the same side in the polarization direction of the vertically polarized high-density antenna 20 under a reflection action of the bottom plate 30, to improve signal strength and achieve high density.

It can be understood that the vertically polarized high-density antenna 20 is a linearly polarized antenna, and the polarization direction of the vertically polarized high-density antenna 20 is a linear direction. In addition, because the bottom plate 30 is disposed on one side in the polarization direction of the vertically polarized high-density antenna 20 and spaced from the vertically polarized high-density antenna 20, a pitch angle of the vertically polarized high-density antenna 20 is small, and an azimuth coverage area is also small, to achieve vertical polarization. In the reconfigurable antenna 205 in this application, the vertically polarized high-density antenna 20 may implement a high density mode of the reconfigurable antenna 205, to implement small-range large-capacity communication.

The controllable reflector 10 is located between the bottom plate 30 and the vertically polarized high-density antenna 20. In the schematic diagram of FIG. 4, there is one controllable reflector 10, and a length direction of the controllable reflector 10 is also disposed in the polarization direction of the vertically polarized high-density antenna 20. In other words, an entirety of the controllable reflector 10 is disposed parallel to the polarization direction of the vertically polarized high-density antenna 20. The controllable reflector 10 includes a switch 13, and the switch 13 is configured to implement switching of the controllable reflector 10 between an off state and an operating state. It can be understood that, as described above, a control circuit 203 controls an operating mode of the reconfigurable antenna 205. In other words, the operating mode of the reconfigurable antenna 205 may be implemented by that the control circuit 203 electrically connecting and controlling the switch 13.

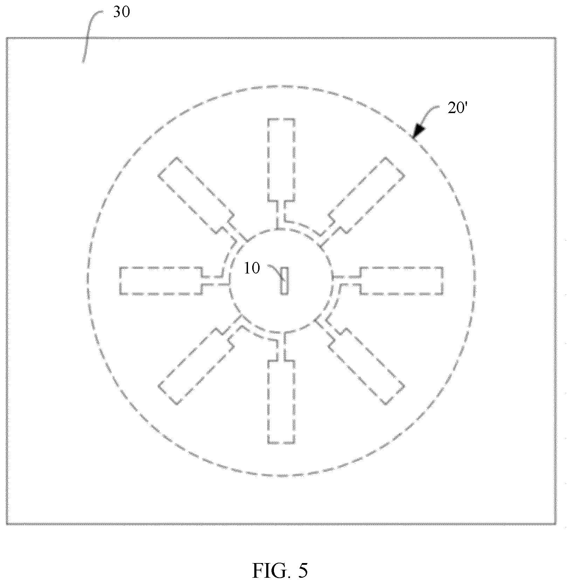

Refer to FIG. 5. In the schematic diagram of FIG. 5, a projection 20' of the vertically polarized high-density antenna 20 on the bottom plate 30 in the polarization direction of the vertically polarized high-density antenna 20 is in an annular shape (a case in which a feeding network is located at a phase center is not considered), and has an inner circle and an outer circle. A projection of the controllable reflector 10 on the bottom plate 30 in the polarization direction is located at a center of the projection 20' in the annular shape. In some embodiments, the controllable reflector 10 may alternatively properly offset relative to the center of the annular shape, but in this case, the reflector 10 still falls within the inner circle of the projection 20' in the annular shape. In some other embodiments, the projection 20' of the vertically polarized high-density antenna 20 on the bottom plate 30 in the polarization direction of the vertically polarized high-density antenna 20 may alternatively be in an elliptical annular shape or approximately in any hollow shape such as a shape of two concentric squares. In this case, the controllable reflector 10 may be located at a center of the hollow shape or offset relative to a central location, and remain within an inner circle of the hollow shape.

Under the action of the switch 13, the controllable reflector 10 can be switched between the off state and the operating state. When the switch 13 is opened, the controllable reflector 10 is in the off state. In this case, the controllable reflector 10 does not affect a beam of the reconfigurable antenna 205, and a signal coverage area of the reconfigurable antenna 205 is represented as a coverage area of the vertically polarized high-density antenna 20. As mentioned above, the coverage area of the vertically polarized high-density antenna 20 is small. In this case, the operating state of the reconfigurable antenna 205 is in a high density mode.

When the switch 13 is closed, the reflector 10 is in the operating state. In this case, the controllable reflector 10 reflects the beam emitted by the vertically polarized high-density antenna 20. Specifically, because the controllable reflector 10 is located at a central location of the vertically polarized high-density antenna 20, the controllable reflector 10 may reflect the signal beam emitted by the vertically polarized high-density antenna 20 outwards in a direction parallel to the bottom plate 30.

To be specific, in a horizontal direction of the vertically polarized high-density antenna 20, the controllable reflector 10 at the central location reflects the signal beam, so that a pitch angle of the vertically polarized high-density antenna 20 is increased, to further extend the coverage area of the vertically polarized high-density antenna 20. In other words, an action radius of the vertically polarized high-density antenna 20 is increased. In this case, the operating state of the reconfigurable antenna 205 may be the foregoing omnidirectional mode or directional mode, and is specifically determined based on a shape of a radiation pattern of the vertically polarized high-density antenna 20.

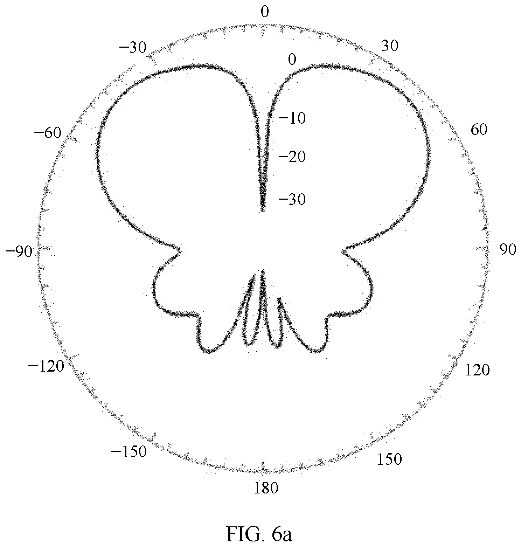

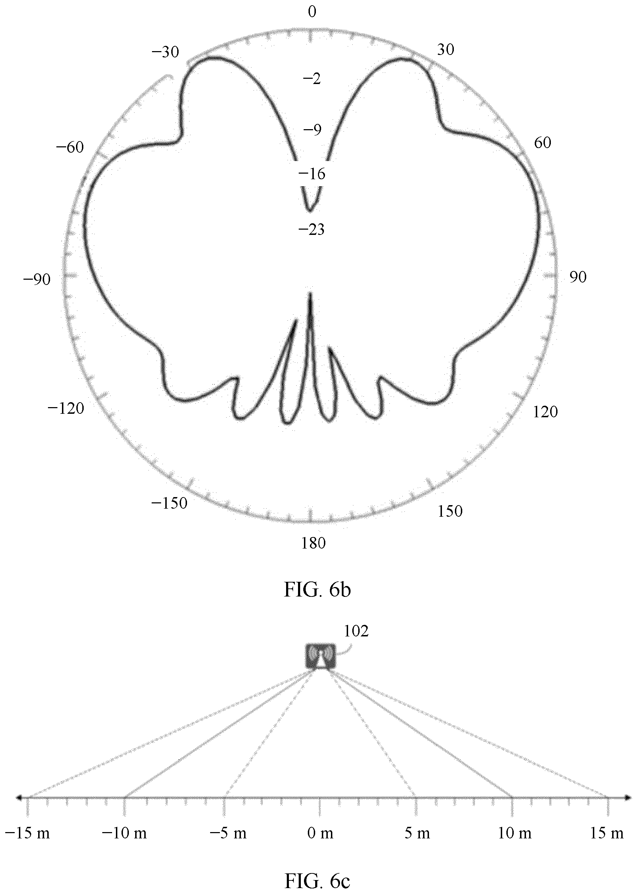

FIG. 6a and FIG. 6b respectively show pitch angle simulation results of a reconfigurable antenna 205 that exist when a controllable reflector 10 is in different states according to this application. FIG. 6a shows a simulation result existing when the controllable reflector 10 is in the off state. It can be learned that, under the action of the vertically polarized high-density antenna 20, an angle corresponding to a maximum gain of a pitch angle of the reconfigurable antenna 205 in this application is 37.5 degrees. In other words, when the reconfigurable antenna 205 in this application operates in the high density mode, a pitch angle of the reconfigurable antenna 205 is approximately 75 degrees. FIG. 6b shows a simulation result existing when the controllable reflector 10 is in the operating state. It can be learned that, under the action of the controllable reflector 10, the angle corresponding to a maximum gain of a pitch angle of the reconfigurable antenna 205 in this application is extended to 70 degrees. In other words, when the reconfigurable antenna 205 in this application operates in the omnidirectional mode or the directional mode, the pitch angle of the reconfigurable antenna 205 is approximately 140 degrees.

With reference to the schematic diagram of FIG. 6c, a height of 3 m is still used for illustration. In a possible implementation, when the vertically polarized high-density antenna 20 in the reconfigurable antenna 205 in this application operates in the high density mode, the signal coverage area of the reconfigurable antenna 205 is shown by dotted lines in FIG. 6c, and signal coverage may be implemented in a range with a radius of 5 m. However, when the vertically polarized high-density antenna 20 in the reconfigurable antenna 205 in this application operates in the omnidirectional mode, the signal coverage area of the reconfigurable antenna 205 is shown by a straight line in FIG. 6c, and signal coverage may be implemented in a range with a radius of 10 m.

It can be learned that, under the action of the controllable reflector 10, the pitch angle of the reconfigurable antenna 205 in this application may be adjusted in a large range. In addition, compared with a pitch angle adjustment manner in which a plurality of antennas are combined and a radio frequency switch chooses to perform switching, in this application, an insertion loss of the reconfigurable antenna 205 is smaller, and antenna operating efficiency is improved. In addition, the pitch angle of the reconfigurable antenna 205 in this application can be adjusted in a large range only by disposing the vertically polarized high-density antenna 20. Compared with a structure in which radio frequency combination is performed on a plurality of antennas, the reconfigurable antenna 205 in this application has a smaller overall size, and further facilitates miniaturization and cost control of the network device in this application.

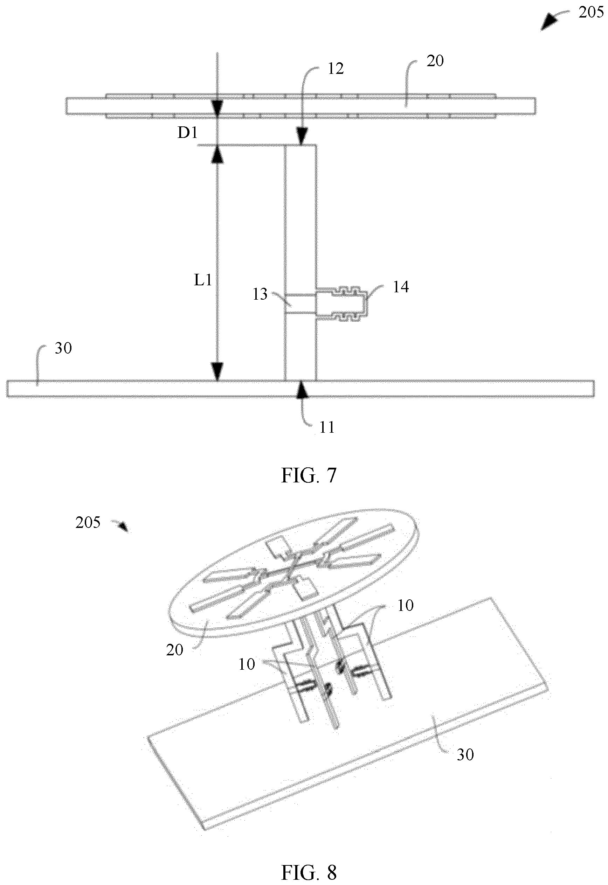

FIG. 7 is a side view of an embodiment of a reconfigurable antenna 205 in this application. In this embodiment, the controllable reflector 10 is in a strip shape, and is located at a center of the vertically polarized high-density antenna 20, and the length direction of the controllable reflector 10 is disposed parallel to the polarization direction of the vertically polarized high-density antenna 20. Because the signal beams emitted by the vertically polarized high-density antenna 20 also propagate approximately parallel to the polarization direction of the vertically polarized high-density antenna 20, the controllable reflector 10 is disposed parallel to the polarization direction to reflect more beams. However, when the controllable reflector 10 is disposed at the central location of the vertically polarized high-density antenna 20, reflection effects of the controllable reflector 10 on signal beams in a range of 360 degrees in the horizontal direction tend to be consistent, so that a radiation pattern of the reconfigurable antenna 205 in this application is distributed more evenly.

In an embodiment, it is further set that the controllable reflector 10 has a first length L1 in the polarization direction, and that the first length L1 meets a condition: $1/4\lambda \leq L1 \leq \lambda$. Further, a distance in which the controllable reflector 10 performs a reflection action on a signal beam is ensured, and reflection efficiency of the controllable reflector 10 is improved.

In this embodiment, the controllable reflector 10 includes a first end 11 and a second end 12 that are opposite in the length direction of the controllable reflector 10, the first end 11 is located on a side close to the bottom plate 30, and the second end 12 is located on a side close to the vertically polarized high-density antenna 20. The second end 12 of the controllable reflector 10 and the vertically polarized high-density antenna 20 are disposed by being spaced from each other, there is a first spacing distance D1 between second end 12 and the vertically polarized high-density antenna 20, the first spacing distance D1 further meets the following condition: $D1 \leq 1/4\lambda$, and $\lambda$ is a wavelength corresponding to an operating frequency band of the vertically polarized high-density antenna 20. Therefore, a phase difference may be formed between the controllable reflector 10 and the vertically polarized high-density antenna 20, to improve reflection efficiency of the controllable reflector 10.

On one side of the first end 11, the first end 11 is in contact with the bottom plate 30 in a fixed manner. In other words, the first end 11 and the bottom plate 30 are electrically connected. In this case, the bottom plate 30 is used as a reflection surface of the vertically polarized high-density antenna 20, and the distance in which the controllable reflector 10 performs an action on the signal beam is extended through an electrical connection between the bottom plate 30 and the controllable reflector 10, to further improve efficiency in reflection performed by the controllable reflector 10 on the signal beam, and further increase the pitch angle of the reconfigurable antenna 205.

The switch 13 is located between the first end 11 and the second end 12, and the switch 13 is located at a location closer to the first end 11 than the second end 12. In other words, the switch 13 is located on the side close to the bottom plate 30, to reduce impact that is on the signal beam and that exists when the controllable reflector 10 is in the off state, provide a larger difference in reflection efficiency of the controllable reflector 10 between the operating state and the off state, and provide a larger pitch angle change amount of the reconfigurable antenna 205 in this application.

According to the invention, as shown in FIG. 7, the controllable reflector 10 is further provided with an inductor structure 14. The inductor structure 14 and the switch 13 are connected in parallel, and form a resonator. A resonance frequency of the resonator falls within the operating frequency band of the vertically polarized high-density antenna 20. The resonator may form large impedance when the switch 13 is opened, to improve an isolation degree that is of the switch 13 and that exists when the switch 13 is in an opened state.

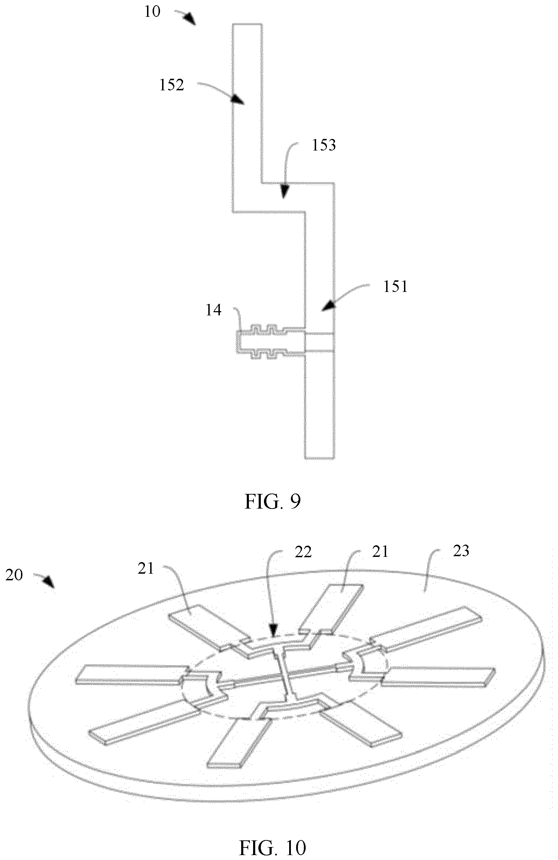

FIG. 8 shows a structure of another embodiment of a reconfigurable antenna 205 in this application. In this embodiment, there are four controllable reflectors 10, and the four controllable reflectors 10 are evenly distributed in a circle, and are all separately disposed by offsetting relative to the center of the vertically polarized high-density antenna 20. Referring to FIG. 9, each controllable reflector 10 includes a first section 151 and a second section 152 that are disposed parallel to the polarization direction, and a connection section 153 connected between the first section 151 and the second section 152.

In this embodiment, a plurality of controllable reflectors 10 are disposed, to extend an action range of the controllable reflector 10 on the signal beam, and further extend the pitch angle of the reconfigurable antenna 205. However, the first section 151 and the second section 152 are disposed, to ensure the distance in which the controllable reflector 10 performs an action on the signal beam, and improves reflection efficiency of the controllable reflector 10.

FIG. 10 shows a possible structure of a vertically polarized high-density antenna 20 according to this application. In the schematic diagram of FIG. 10, the vertically polarized high-density antenna 20 includes N dipoles 21, a feeding part 22, and a circuit board 23. The circuit board 23 may be a printed circuit board (printed circuit board, PCB). A quantity N of dipoles 21 is an integer greater than or equal to 3. In FIG. 10, that N is 8 is used as an example for description, but does not constitute a limitation on the quantity of dipoles 21 of the vertically polarized high-density antenna 20. The N dipoles 21 and the feeding part 22 are all located on the circuit board 23, and the N dipoles 21 are all connected to the feeding part 22.

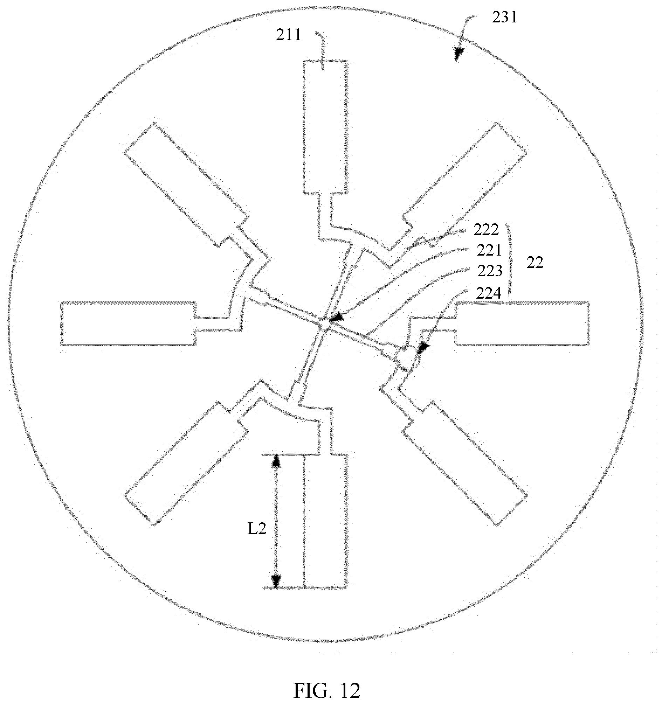

As shown in FIG. 10, the N dipoles 21 may be distributed and arranged in a circle whose circle center is an antenna phase center. Optionally, the dipoles 21 may be arranged in the circle at equal intervals. In other words, an included angle between connection lines between the antenna phase center and every two adjacent dipoles 21 is 360/N degrees. A single dipole 21 may be constructed as a strip rectangle, and a length direction of the dipole 21 may point to a center of an annular shape. In an embodiment, a length of the single dipole 21 in this direction meets a condition: $1/4\lambda \le L2 \le 3/4\lambda$ (refer to FIG. 12). A length direction of each dipole 21 points to a center of the vertically polarized high-density antenna, so that the radiation pattern of the vertically polarized high-density antenna can be distributed more evenly. However, the length of each dipole 21 is limited, to improve radiation efficiency of each dipole 21.

As mentioned above, the N dipoles 21 may further enclose an elliptical or rectangular annular shape. The power feeding part 22 is located inside the annular shape enclosed by the dipoles 21, so that an insertion loss from the feeding part 22 to each dipole 21 is smaller. When the quantity N of dipoles 21 is an even number, the N dipoles 21 may include a plurality of dipole pairs, and two dipoles 21 in each dipole pair are centrally symmetrical with respect to the antenna phase center. For example, when N is 8, the included angle between connection lines between the antenna phase center and every two adjacent dipoles 21 is 45 degrees. The eight dipoles 21 may be divided into four dipole pairs, and two dipoles 21 in each dipole pair are centrally symmetrical with respect to the antenna phase center. Certainly, the dipoles 21 may be arranged at unequal intervals. For example, it is assumed that an included angle between connection lines between the antenna phase center and two adjacent dipoles 21 connected to two ends of a same transmission line in the feeding part 22 is a first included angle, an included angle between connection lines between the antenna phase center and two adjacent dipoles 21 connected to different transmission lines is a second included angle, and the first included angle and the second included angle may be different.

In addition, the N dipoles 21 and the feeding part 22 may all be printed on a surface of the circuit board 23. Based on different feeding parts 22 and different N dipoles 21, the feeding part 22 and the N dipoles 21 may be located on an upper surface 231 of the circuit board 23, may be located on a lower surface 232 of the circuit board 23, or may be located on both an upper surface 231 and a lower surface 52.

It can be understood that the N dipoles 21 and feeding parts 22 that are correspondingly connected to the N dipoles 21 may all be located on a same outer surface of the circuit board 23. However, in some other embodiments, the vertically polarized high-density antenna 20 may alternatively be in an antenna form of a sheet metal structure. In this case, each dipole 21 is of a metal structure and has specific rigidity and strength. In this form, the circuit board 23 may be omitted.

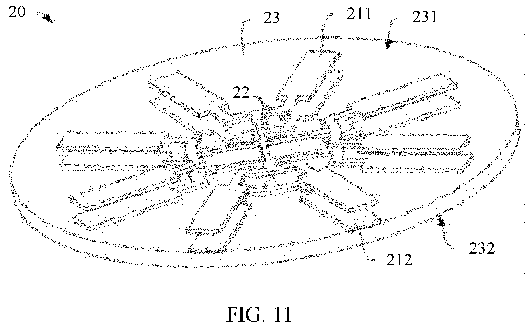

In this application, the dipole 21 in the vertically polarized high-density antenna 20 may be a dipole element or a monopole element, and correspondingly, the vertically polarized high-density antenna 20 is a dipole antenna or a monopole antenna. The feeding part 22 may be disposed differently based on different forms of the dipole 21. FIG. 11 shows a structure in which a vertically polarized high-density antenna 20 is a dipole antenna. In this structure, the dipole 21 includes an upper dipole 211 and a lower dipole 212, the upper dipole 211 is located on the upper surface 231 of the circuit board 23, and the lower dipole 212 is located on the lower surface 232 of the circuit board 23.

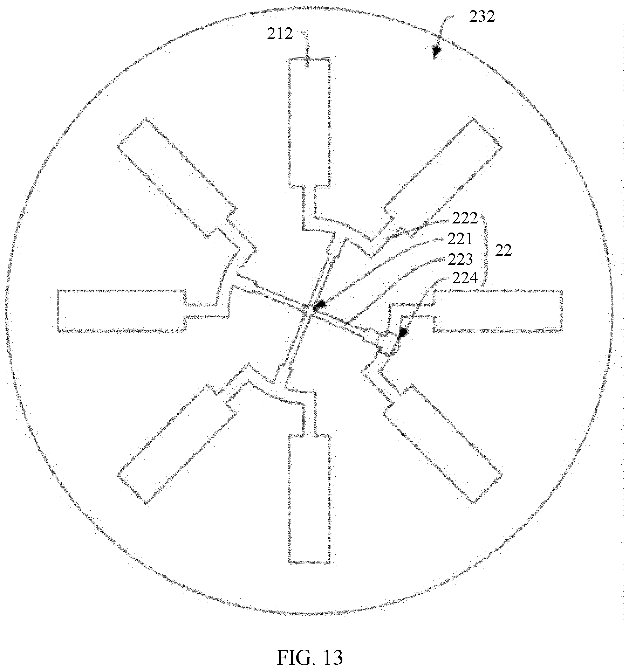

The feeding part 22 forms a double-sided parallel microstrip line power division network. The feeding part 22 includes a part located on the upper surface 231, and the part is used to feed each upper dipole 211; and the feeding part 22 includes a part located on the lower surface 232, and the part is used to feed each lower dipole 212. FIG. 12 and FIG. 13 are schematic diagrams of planes of the upper surface 231 and the lower surface 232 in this embodiment. The feeding part 22 is used as a double-sided parallel microstrip line power division network, and an upper part and a lower part of the feeding portion 22 have a same shape. The upper dipole 211 and the lower dipole 212 may have a same shape. It can be understood that, in some other embodiments, the upper dipole 211 and the lower dipole 212 may alternatively have different shapes, or the upper dipole 211 and the lower dipole 212 may alternatively be distributed in a mirroring manner with respect to the feeding part 22.

FIG. 12 and FIG. 13 each shows a structure of the feeding part 22 in this application. The feeding part 22 may include a first power splitter 221, a plurality of ohm transmission lines 222, a plurality of impedance conversion lines 223, and a second power splitter 224. The second power splitter 224 may be a two-way power splitter, and the first power splitter 221 may be selected based on the quantity of dipoles 21. For example, in the example shown in FIG. 12, there are eight dipoles, and when the second power splitter 224 is a two-way power splitter, the first power splitter 221 may be a four-way power splitter. Therefore, eight feeding lines may be led from a feeding point of the feeding part 22 through the first power splitter 221 and the second power splitter 224, to feed the eight dipoles 21 respectively. The first power splitter 221 of the feeding part 22 may be located at the antenna phase center.

For example, as shown in FIG. 12, four output ends of the first power splitter 221 may be connected to four impedance conversion lines 223, and the other end of each impedance conversion line 223 is connected to one end of one ohm transmission line 222. The impedance conversion line 223 may be used to implement impedance matching between the ohm transmission line 222 and the first power splitter 221. The other end of each ohm transmission line 222 is connected to one second power splitter 224. Two output ends of the second power splitter 224 each are connected to one upper dipole 211. Therefore, after dividing one path of current input into the feeding part 22 into four paths, the first power splitter 221 may output the four paths of currents through the four output ends. The four paths of currents are respectively transmitted to four second power splitters 224 through the four impedance conversion lines 223 and four ohm transmission lines 222 connected to the four impedance conversion lines 223, and each second power splitter 224 may divide a received current into two paths, and respectively output the two paths of currents to two adjacent upper dipoles 211, to feed the two adjacent upper dipoles 211.

In an embodiment, the impedance conversion line 223 may be a 1/4 wavelength impedance conversion line, and the ohm transmission line 222 may be a 50 ohm microstrip line. However, on the lower surface 52 shown in FIG. 13, the structure of the feeding part 22 is also similar to that on the upper surface 51 shown in FIG. 12, and a current is respectively transferred to each lower dipole 22. Details are not described herein in this application.

In FIG. 11 to FIG. 13, only an example in which N is 8 is used for description. For another case in which N is an even number, refer to the foregoing examples. A difference is that when N is a different even number, the feeding part 22 includes a different first power splitter 221, and the feeding part 22 also includes different quantities of impedance conversion lines 223 and different quantities of ohm transmission lines 222. For example, when N is 6, a first power splitter in an upper surface network and a first power splitter in a lower surface network may be three-way power splitters. Correspondingly, the first power splitter may be connected to three impedance conversion lines 223, the three impedance conversion lines 223 are connected to three ohm transmission lines 222, each ohm transmission line 222 is connected to one two-way second power splitter 224, and each second power splitter 224 may be connected to two upper dipoles 211 or lower dipoles 212.

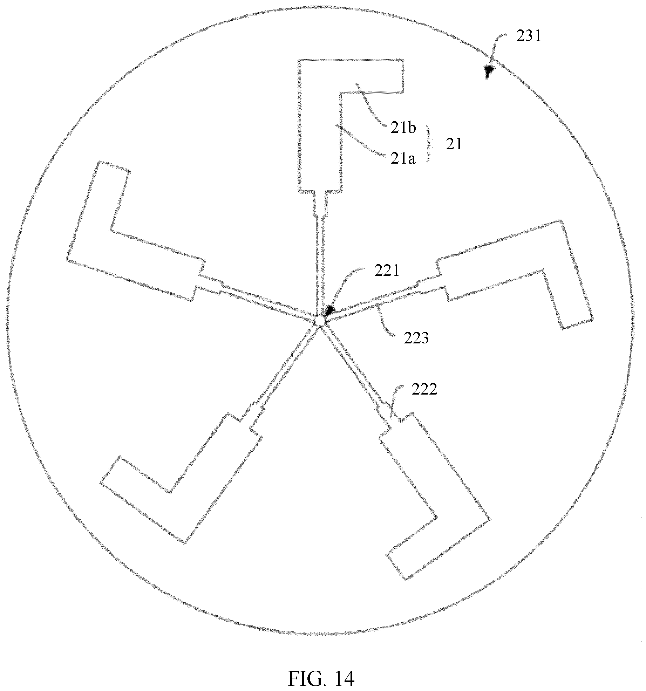

It can be understood that when N is an odd number, refer to FIG. 14. A feeding part 22 located on the upper surface 231 of the circuit board 23 may include one first power splitter 221, a plurality of impedance conversion lines 223, and a plurality of ohm transmission lines 222. As shown in FIG. 14, that N is 5 is used as an example. The first power splitter 221 may be a five-way power splitter, the first power splitter 221 may be connected to five impedance conversion lines 223, the other end of each impedance conversion line 223 is connected to one ohm transmission line 222, and a tail end of each ohm transmission line 222 may be connected to one upper dipole 211 (which is identified as a dipole 21 in FIG. 14). Correspondingly, a feeding part 22 located on the lower surface 232 of the circuit board 23 has a same structure as the upper surface 231, and each lower dipole 212 is also connected to one end of one ohm transmission line 222 on the lower surface 232.

For example, FIG. 14 also shows a structure in which the dipole 21 is L-shaped. As shown in FIG. 14, the L-shaped dipole 21 has a radial part 21a and a non-radial part 21b, and the radial part 21a points to the antenna phase center. The non-radial part 21b may be approximately disposed perpendicular to the radial part 21a. FIG. 14 shows merely a possible implementation of the dipole 21 provided in this embodiment of this application. In some other possible implementations, the dipole 21 may alternatively be of another shape, for example, any shape such as a trapezoidal shape, a bent structure, a T-shape, or a Y-shape.

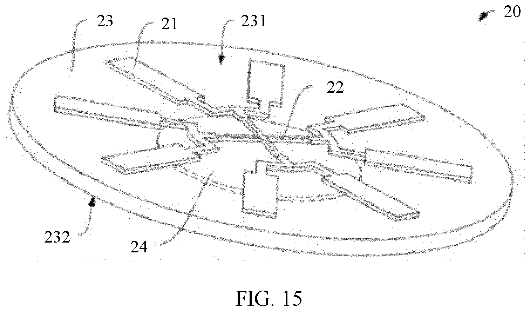

For example, FIG. 15 shows a structure in which the vertically polarized high-density antenna 20 is a monopole antenna. As shown in FIG. 15, the vertically polarized high-density antenna 20 includes eight dipoles 21, a feeding part 22, a grounding part 24, and a circuit board 23. The eight dipoles 21 are all located on the upper surface 231 of the circuit board 23, and the feeding part 22 is also located on the upper surface 231. The grounding part 24 is located on the lower surface 232 of the circuit board 23. In the illustrated embodiment, the grounding part 24 is annular.

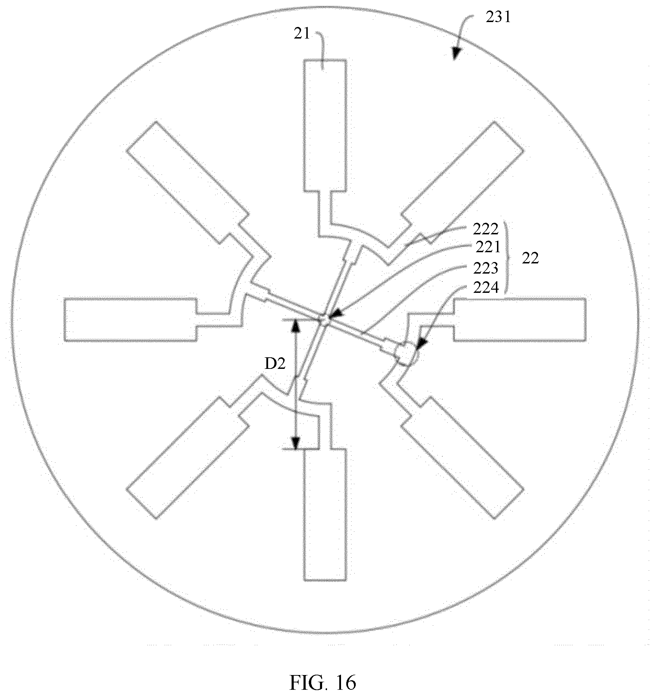

With reference to FIG. 16, in this embodiment, the feeding part 22 may also include a first power splitter 221, a plurality of ohm transmission lines 222, a plurality of impedance conversion lines 223, and a second power splitter 224. A structure of the feeding part is similar to that shown in FIG. 12, and the second power splitter 224 is connected to each dipole 21. For specific settings of the feeding part 22 and the dipole 21, refer to related descriptions in FIG. 12 to FIG. 14. Details are not described herein again in this application. The grounding part 24 forms an inner conductor of the monopole antenna, to improve radiation efficiency of each dipole 21. In an embodiment, the grounding part 24 is also located at a center of a projection 20' of the vertically polarized high-density antenna 20, and the grounding part 24 and a projection of each dipole 21 are flush or has a gap.

In this embodiment of this application, when the plurality of dipoles 21 are arranged in a circle, a nearest distance D2 between each dipole 21 and the antenna phase center may be adjusted, to further adjust an azimuth of the vertically polarized high-density antenna 20, in other words, adjust a coverage area of the vertically polarized high-density antenna 20 in a horizontal direction. For example, a distance D2 between a single dipole 21 and the antenna phase center meets a condition: $1/8\lambda \leq D2 \leq 1/2\lambda$.

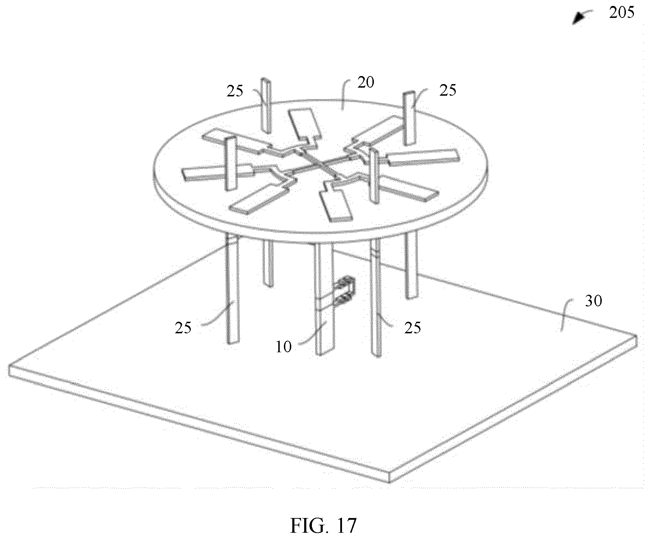

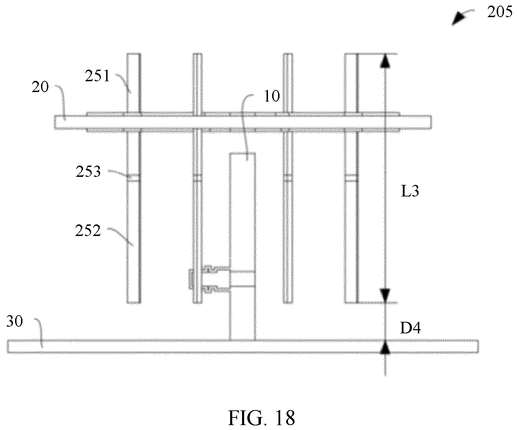

Referring to the embodiment in FIG. 17, in this application, the vertically polarized high-density antenna 20 may be further provided with a plurality of azimuth reflectors 25. The plurality of azimuth reflectors 25 are also distributed in a circle, and a maximum of one azimuth reflector 25 is disposed between two adjacent dipoles 21. A length direction of the azimuth reflector 25 passes through a plane on which the plurality of dipoles 21 are located. In other words, the azimuth reflector 25 may be disposed parallel to the polarization direction of the vertically polarized high-density antenna 20. Simultaneously referring to FIG. 18, the azimuth reflector 25 includes a first reflection section 251 and a second reflection section 252 in the length direction of the azimuth reflector 25. The first reflection section 251 is located on a side that is of the dipole 21 and that is away from the bottom plate 30, and the second reflection section 252 is located between the dipole 21 and the bottom plate 30.

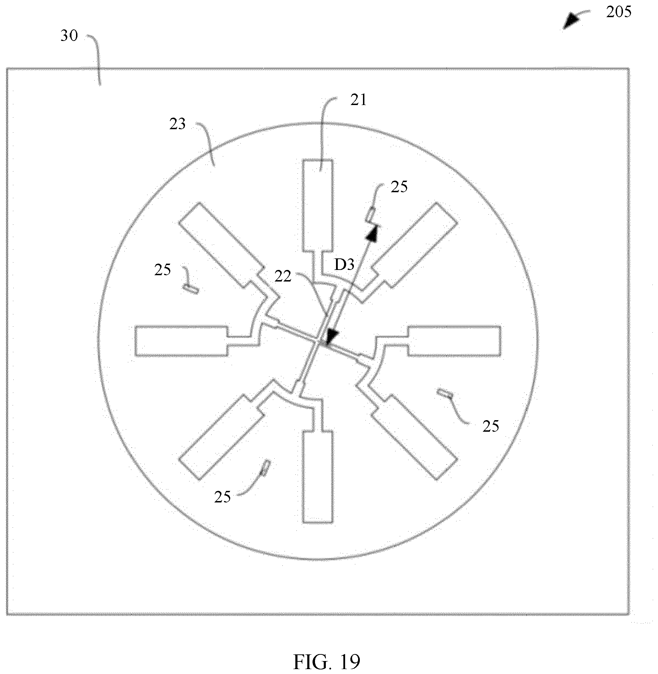

Further refer to FIG. 19 for understanding. In the schematic diagram of FIG. 19, there are four azimuth reflectors 25, and the four azimuth reflectors 25 are also evenly distributed in a circle, and each azimuth reflector 25 is located between two adjacent dipoles 21. The four azimuth reflectors 25 are paired, and each pair of azimuth reflectors 25 is symmetrically distributed with respect to the antenna phase center. The azimuth reflector 25 may reflect a signal beam in the horizontal direction of the vertically polarized high-density antenna 20, and the azimuth reflectors 25 are disposed at intervals, so that the radiation pattern of the vertically polarized high-density antenna 20 is even, and a radiation capability of the vertically polarized high-density antenna 20 in the range of 360 degrees in the horizontal direction is improved.

In an embodiment, a distance D3 between a single azimuth reflector 25 and the antenna phase center is greater than or equal to the distance D2 between the dipole 21 and the antenna phase center, and is less than or equal to a maximum distance between the dipole 21 and the antenna phase center. In other words, D3 meets a condition: $D2 \leq D3 \leq (D2+L2)$. It may also be described as follows: A projection of the azimuth reflector 25 on the bottom plate 30 is located within an annular region enclosed by the dipoles 21. Therefore, the azimuth reflector 25 can reflect the signal beam of the vertically polarized high-density antenna 20 in the horizontal direction, and control a horizontal coverage area of the vertically polarized high-density antenna 20 to be small.

Refer to FIG. 18 again. The azimuth reflector 25 has a length L3 in the polarization direction of the azimuth reflector 25. In an embodiment, the length L3 of the azimuth reflector 25 is further controlled to meet a condition: $1/5\lambda \leq L3 \leq \lambda$, to ensure a distance in which the azimuth reflector 25 performs an action on the signal beam. In addition, on a side that is of the azimuth reflector 25 and that is close to the bottom plate 30, namely, on a side of the second reflection section 252 of the azimuth reflector 25, the azimuth reflector 25 and the bottom plate 30 are further disposed by being spaced from each other, and it may be set that a spacing distance D4 meets a condition: D4 ≤ 1/4λ. The azimuth reflector 25 and the bottom plate 30 are spaced from each other, to avoid too long distance in which the azimuth reflector 25 performs an action, causing a too large coverage area of the vertically polarized high-density antenna 20 in the horizontal direction. It can be understood that, in the embodiment in which the vertically polarized high-density antenna 20 includes the circuit board 23, the azimuth reflector 25 may be fastened to the circuit board 23, and the azimuth reflector 25 is disposed by being spaced from the bottom plate 30. However, when the vertically polarized high-density antenna 20 is of a sheet metal structure, the vertically polarized high-density antenna 20 does not include the circuit board 23, the azimuth reflector 25 may also be fastened to the bottom plate 30, and the azimuth reflector 25 and the bottom plate 30 need to be isolated from each other.

In the schematic diagram of FIG. 18, the azimuth reflector 25 is also provided with an azimuth switch 253. The azimuth switch 253 may also be used to switch the azimuth reflector 25 between an off state and an operating state. It can be understood that, that the control circuit 203 controls the operating mode of the reconfigurable antenna 205 may further include: The control circuit 203 controls the azimuth switch 253. Specifically, when each azimuth switch 253 on each reflector 25 is in an operating state, the vertically polarized high-density antenna 20 may be in the omnidirectional mode. In this case, coverage areas of the vertically polarized high-density antennas 20 in the range of 360 degrees in the horizontal direction tend to be consistent based on the antenna phase center. However, as mentioned above, when a distance between access points 102 is large, the reconfigurable antenna 205 may further implement signal coverage in a super-large-angle directional mode. In this case, only azimuth switches 253 of two adjacent azimuth reflectors 25 may be controlled to be in an operating state, and the other azimuth switches 253 are in an opened state, so that the vertically polarized high-density antenna 20 is in the directional mode.

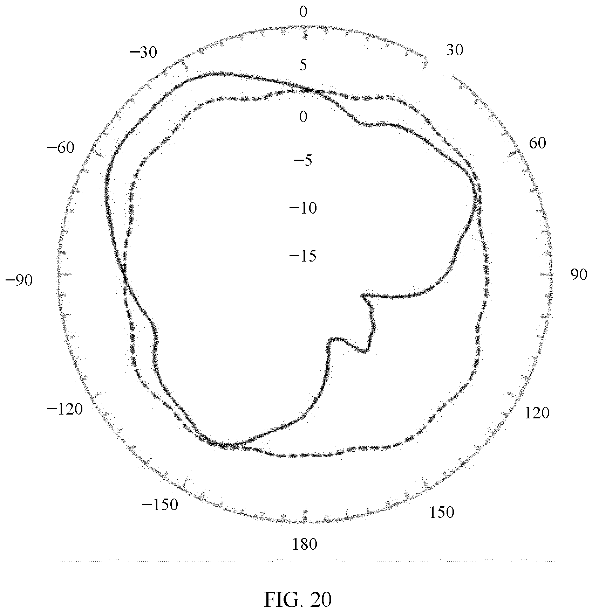

Refer to the schematic diagram of FIG. 20, when the vertically polarized high-density antenna 20 is in the omnidirectional mode (which is shown by using a solid line in FIG. 20), a coverage area of the vertically polarized high-density antenna 20 in the range of 360 degrees is even. However, when the vertically polarized high-density antenna 20 is in the directional mode, as shown by a dashed line in the figure, a gain increase of 2 decibels of the vertically polarized high-density antenna 20 in a 315-degree direction is achieved, and a signal coverage area in the direction is wider. However, two adjacent azimuth switches 253 have different locations, and a wider directional coverage area of the vertically polarized high-density antenna 20 in this application in a 45-degree, 135-degree, or 225-degree direction is achieved. It can be understood that, under control of the operating state of the controllable reflector 10 in the reconfigurable antenna 205, a pitch angle of the reconfigurable antenna 205 in the directional mode in this application may also be correspondingly adjusted, and a gain of 1 decibel to 2.5 decibels is realized at a preset angle, to obtain a greater signal coverage area in the directional mode.

Refer to FIG. 6c again. In this implementation, when the vertically polarized high-density antenna 20 is in the directional mode, as shown by a dashed line in FIG. 6c, the signal coverage area of the vertically polarized high-density antenna 20 may be extended to a range with a radius of 15 m. It can be understood that a coverage area in the directional mode may also be adjusted based on a scenario requirement. In this application, a maximum coverage area of the reconfigurable antenna 205 may alternatively exceed the range of the radius of 15 m or smaller than the range of the radius of 15 m.

It should be noted that the schematic diagram of FIG. 20 is described based on an embodiment in which there are four azimuth reflectors 25, and the four azimuth reflectors 25 are evenly distributed in a circle. In some other embodiments, the four azimuth reflectors 25 may alternatively be distributed in an uneven manner, and corresponding directional coverage angles are adjusted correspondingly. Alternatively, for the reconfigurable antenna 205 in this application, another quantity of azimuth reflectors 25 may alternatively be disposed based on a use requirement, and operating states of different azimuth reflectors 25 cooperate, to implement directional coverage effects of different quantities of azimuth reflectors 25 at different angles.

In the schematic diagram of FIG. 18, the azimuth switch 253 may alternatively be located at a midpoint of the azimuth reflector 25 in the polarization direction of the vertically polarized antenna 20. A location of the azimuth switch 253 is set, to control a difference in horizontal radiation patterns of the azimuth reflector 25 between the off state and the operating state. To be specific, when the azimuth switch 253 is disposed at a midpoint location of the azimuth reflector 25, a coverage area that is of the reconfigurable antenna 205 in this application in the horizontal direction and that exist when the azimuth reflector 25 is in the off state may have a larger difference from a coverage area that is in the horizontal direction and that exists when the azimuth reflector 25 is in the operating state, in other words, there is a larger change in the coverage area of the reconfigurable antenna 205 in different operating modes, to adapt to more different use scenario requirements.

**Claims**

1. A reconfigurable antenna (205), comprising a bottom plate (30), a vertically polarized high-density antenna (20) wherein the bottom plate (30) is disposed in the polarization direction of the vertically polarized high-density antenna (20), and a controllable reflector (10), wherein

the controllable reflector (10) is located between the bottom plate (30) and the vertically polarized high-density antenna (20), and a projection of the controllable reflector (10) on the bottom plate (30) is at a center of a projection of the vertically polarized high-density antenna (20) on the bottom plate (30); and

the controllable reflector (10) comprises a switch (13), and the switch (13) is configured to enable the controllable reflector (10) to be in an operating state or an off state **characterized in that** the controllable reflector (10) is further provided with an inductor structure (14), the inductor structure (14) and the switch (13) are connected in parallel, the inductor structure (14) and the switch (13) form a resonator, and a resonance frequency of the resonator falls within the operating frequency band of the vertically polarized high-density antenna (20).

2. The reconfigurable antenna (205) according to claim 1, wherein the controllable reflector (10) comprises a part parallel to a polarization direction of the vertically polarized high-density antenna (20), a distance D1 between the controllable reflector (10) and the vertically polarized high-density antenna (20) meets a condition: D1 ≤ 1/4λ, and λ is a wavelength corresponding to an operating frequency band of the vertically polarized high-density antenna (20).

3. The reconfigurable antenna (205) according to claim 1 or 2, wherein in the polarization direction of the vertically polarized high-density antenna (20), the controllable reflector (10) comprises a first end (11) close to the bottom plate (30), and the first end (11) is electrically connected to the bottom plate (30).

4. The reconfigurable antenna (205) according to claim 3, wherein the controllable reflector (10) further comprises a second end (12) opposite the first end (11), and the switch (13) is located closer to the first end (11) than the second end (12).

5. The reconfigurable antenna (205) according to claim 2, or claim 3 or 4 when dependent on claim 2, wherein a length of the controllable reflector (10) in the polarization direction of the vertically polarized high-density antenna (20) is a first length L1, and the first length L1 meets a condition: 1/4λ ≤ L1 ≤ λ.

6. The reconfigurable antenna (205) according to any one of claims 1 to 5, wherein there is one controllable reflector (10); or

there are a plurality of controllable reflectors (10), and the plurality of controllable reflectors (10) are evenly distributed.

7. The reconfigurable antenna (205) according to any one of claims 1 to 6, wherein when the controllable reflector (10) is in the off state, an angle corresponding to a maximum gain of a pitch angle of the reconfigurable antenna (205) is 37.5 degrees; or

when the controllable reflector (10) is in the operating state, an angle corresponding to a maximum gain of a pitch angle of the reconfigurable antenna (205) is 70 degrees.

8. The reconfigurable antenna (205) according to any one of claims 1 to 7, wherein when the vertically polarized high-density antenna (20) is in a directional mode, a maximum gain that is of the reconfigurable antenna (205) and that exists when the controllable reflector (10) is in the operating state is 1 decibel to 2.5 decibels greater than a maximum gain that is of the reconfigurable antenna (205) and that exists when the controllable reflector (10) is in the off state.

9. A network device, comprising a radio frequency circuit (202), a control circuit (203), and the reconfigurable antenna (205) according to any one of claims 1 to 8, wherein the radio frequency circuit (202) is electrically connected to the reconfigurable antenna (205), and the control circuit (203) is configured to control the switch (13).

**Patentansprüche**

1. Rekonfigurierbare Antenne (205), umfassend eine Bodenplatte (30), eine vertikal polarisierte Antenne (20) hoher Dichte, wobei die Bodenplatte (30) in der Polarisationsrichtung der vertikal polarisierten Antenne (20) hoher Dichte angeordnet ist, und einen steuerbaren Reflektor (10), wobei sich der steuerbare Reflektor (10) zwischen der Bodenplatte (30) und der vertikal polarisierten Antenne (20) hoher Dichte befindet und eine Projektion des steuerbaren Reflektors (10) auf der Bodenplatte (30) in einem Zentrum einer Projektion der vertikal polarisierten Antenne (20) hoher Dichte auf der Bodenplatte (30) liegt; und

der steuerbare Reflektor (10) einen Schalter (13) umfasst und der Schalter (13) dazu konfiguriert ist, zu ermöglichen, dass sich der steuerbare Reflektor (10) in einem Betriebszustand oder einem Aus-Zustand befindet; **dadurch gekennzeichnet, dass** der steuerbare Reflektor (10) ferner mit einer Induktorstruktur (14) bereitgestellt ist, die Induktorstruktur (14) und der Schalter (13) parallel geschaltet sind, die Induktorstruktur (14) und der Schalter (13) einen Resonator ausbilden und eine Resonanzfrequenz des Resonators in das Betriebsfrequenzband der vertikal polarisierten Antenne (20) hoher Dichte fällt.

**2.** Rekonfigurierbare Antenne (205) nach Anspruch 1, wobei der steuerbare Reflektor (10) einen Teil parallel zu einer Polarisationsrichtung der vertikal polarisierten Antenne (20) hoher Dichte umfasst, wobei ein Abstand D1 zwischen dem steuerbaren Reflektor (10) und der vertikal polarisierten Antenne (20) hoher Dichte eine Bedingung erfüllt: D1 ≤ 1/4λ und λ eine Wellenlänge entsprechend einem Betriebsfrequenzband der vertikal polarisierten Antenne (20) hoher Dichte ist.

**3.** Rekonfigurierbare Antenne (205) nach Anspruch 1 oder 2, wobei der steuerbare Reflektor (10) in der Polarisationsrichtung der vertikal polarisierten Antenne (20) hoher Dichte ein erstes Ende (11) nahe der Bodenplatte (30) umfasst und das erste Ende (11) elektrisch mit der Bodenplatte (30) verbunden ist.

**4.** Rekonfigurierbare Antenne (205) nach Anspruch 3, wobei der steuerbare Reflektor (10) ferner ein dem ersten Ende (11) gegenüberliegendes zweites Ende (12) umfasst und sich der Schalter (13) näher an dem ersten Ende (11) als dem zweiten Ende (12) befindet.

**5.** Rekonfigurierbare Antenne (205) nach Anspruch 2 oder Anspruch 3 oder 4, wenn abhängig von Anspruch 2, wobei eine Länge des steuerbaren Reflektors (10) in der Polarisationsrichtung der vertikal polarisierten Antenne (20) hoher Dichte eine erste Länge L1 ist und die erste Länge L1 eine Bedingung erfüllt: 1/4λ ≤ L1 ≤ λ.

**6.** Rekonfigurierbare Antenne (205) nach einem der Ansprüche 1 bis 5, wobei ein steuerbarer Reflektor (10) vorhanden ist; oder eine Vielzahl von steuerbaren Reflektoren (10) vorhanden ist und die Vielzahl von steuerbaren Reflektoren (10) gleichmäßig verteilt ist.

**7.** Rekonfigurierbare Antenne (205) nach einem der Ansprüche 1 bis 6, wobei, wenn sich der steuerbare Reflektor (10) in dem Aus-Zustand befindet, ein Winkel entsprechend einer maximalen Verstärkung eines Pitchwinkels der rekonfigurierbaren Antenne (205) 37,5 Grad beträgt; oder wenn sich der steuerbare Reflektor (10) in dem Betriebszustand befindet, ein Winkel entsprechend einer maximalen Verstärkung eines Pitchwinkels der rekonfigurierbaren Antenne (205) 70 Grad beträgt.

**8.** Rekonfigurierbare Antenne (205) nach einem der Ansprüche 1 bis 7, wobei, wenn sich die vertikal polarisierte Antenne (20) hoher Dichte in einem Richtungsmodus befindet, eine maximale Verstärkung, die von der rekonfigurierbaren Antenne (205) ist und die existiert, wenn sich der steuerbare Reflektor (10) in dem Betriebszustand befindet, 1 Dezibel bis 2,5 Dezibel größer als eine maximale Verstärkung ist, die von der rekonfigurierbaren Antenne (205) ist und die existiert, wenn sich der steuerbare Reflektor (10) in dem Aus-Zustand befindet.

**9.** Netzwerkvorrichtung, umfassend eine Hochfrequenzschaltung (202), eine Steuerschaltung (203) und die rekonfigurierbare Antenne (205) nach einem der Ansprüche 1 bis 8, wobei die Hochfrequenzschaltung (202) elektrisch mit der rekonfigurierbaren Antenne (205) verbunden ist und die Steuerschaltung (203) dazu konfiguriert ist, den Schalter (13) zu steuern.

**Revendications**

**1.** Antenne reconfigurable (205), comprenant une plaque inférieure (30), une antenne haute densité polarisée verticalement (20), dans laquelle la plaque inférieure (30) est disposée dans la direction de polarisation de l'antenne haute densité polarisée verticalement (20), et un réflecteur commandable (10), dans laquelle

le réflecteur commandable (10) est situé entre la plaque inférieure (30) et l'antenne haute densité polarisée verticalement (20), et une projection du réflecteur commandable (10) sur la plaque inférieure (30) est au centre d'une projection de l'antenne haute densité polarisée verticalement (20) sur la plaque inférieure (30) ; et le réflecteur commandable (10) comprend un commutateur (13), et le commutateur (13) est configuré pour permettre au réflecteur commandable (10) d'être dans un état de fonctionnement ou dans un état d'arrêt **caractérisée en ce que** le réflecteur commandable (10) est également pourvu d'une structure d'inducteur (14), la structure d'inducteur (14) et le commutateur (13) sont connectés en parallèle, la structure d'inducteur (14) et le commutateur (13) forment un résonateur, et une fréquence de résonance du résonateur tombe dans la bande de fréquence de fonctionnement de l'antenne haute densité polarisée verticalement (20).

**2.** Antenne reconfigurable (205) selon la revendication 1, dans laquelle le réflecteur commandable (10) comprend une partie parallèle à une direction de polarisation de l'antenne haute densité polarisée verticalement (20), une distance D1 entre le réflecteur commandable (10) et l'antenne haute densité polarisée verticalement (20) satisfait à une condition : D1 ≤ 1/4λ, et λ est une longueur d'onde correspondant à une bande de fréquence de fonctionnement de l'antenne haute densité polarisée verticalement (20).

3. Antenne reconfigurable (205) selon la revendication 1 ou 2, dans laquelle dans la direction de polarisation de l'antenne haute densité polarisée verticalement (20), le réflecteur commandable (10) comprend une première extrémité (11) proche de la plaque inférieure (30), et la première extrémité (11) est connectée électriquement à la plaque inférieure (30).

4. Antenne reconfigurable (205) selon la revendication 3, dans laquelle le réflecteur commandable (10) comprend également une seconde extrémité (12) opposée à la première extrémité (11), et le commutateur (13) est situé plus près de la première extrémité (11) que de la seconde extrémité (12).

5. Antenne reconfigurable (205) selon la revendication 2, ou la revendication 3 ou 4 lorsqu'elle dépend de la revendication 2, dans laquelle une longueur du réflecteur commandable (10) dans la direction de polarisation de l'antenne haute densité polarisée verticalement (20) est une première longueur L1, et la première longueur L1 satisfait à une condition :

$$1/4\lambda \leq L1 \leq \lambda.$$

6. Antenne reconfigurable (205) selon l'une quelconque des revendications 1 à 5, dans laquelle il existe un réflecteur commandable (10) ; ou
il y a une pluralité de réflecteurs commandables (10), et la pluralité de réflecteurs commandables (10) sont répartis uniformément.

7. Antenne reconfigurable (205) selon l'une quelconque des revendications 1 à 6, dans laquelle, lorsque le réflecteur commandable (10) est dans l'état d'arrêt, un angle correspondant à un gain maximal d'un angle de pas de l'antenne reconfigurable (205) est de 37,5 degrés ; ou
lorsque le réflecteur commandable (10) est dans l'état de fonctionnement, un angle correspondant à un gain maximal d'un angle de pas de l'antenne reconfigurable (205) est de 70 degrés.

8. Antenne reconfigurable (205) selon l'une quelconque des revendications 1 à 7, dans laquelle, lorsque l'antenne haute densité polarisée verticalement (20) est dans un mode directionnel, un gain maximal qui est de l'antenne reconfigurable (205) et qui existe lorsque le réflecteur commandable (10) est dans l'état de fonctionnement est de 1 décibel à 2,5 décibels supérieur à un gain maximal qui est de l'antenne reconfigurable (205) et qui existe lorsque le réflecteur commandable (10) est dans l'état d'arrêt.

9. Dispositif de réseau, comprenant un circuit radiofréquence (202), un circuit de commande (203) et l'antenne reconfigurable (205) selon l'une quelconque des revendications 1 à 8, dans lequel le circuit radiofréquence (202) est connecté électriquement à l'antenne reconfigurable (205), et le circuit de commande (203) est configuré pour commander le commutateur (13).

FIG. 1

FIG. 2

205

201                                    202                                    20

| Baseband circuit | | Radio frequency circuit | | Vertically polarized high-density antenna |

203                                                                            13

| Control circuit | | Switch |

Reconfigurable antenna

FIG. 3

205

20

13

30

10

FIG. 4

FIG. 5

FIG. 6a

FIG. 6b

FIG. 6c

FIG. 7

FIG. 8

FIG. 9

FIG. 10

FIG. 11

FIG. 12

FIG. 13

FIG. 14

FIG. 15

FIG. 16

FIG. 17

205

20

251

253

252

10

L3

D4

30

FIG. 18

FIG. 19

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017033471 A1
- CN 104538738 A